# EUROPÄISCHE PATENTSCHRIFT

(11) **EP 0 654 206 B1**
(45) Veröffentlichungstag und Bekanntmachung des Hinweises auf die Patenterteilung: **08.03.2000**
(21) Anmeldenummer: 94115411.4
(22) Anmeldetag: 30.09.1994
(51) Int. Cl.: A01C 5/06

(54) **Drillmaschine**
Seeddrill
Semoir

(30) Priorität: 19.11.1993 DE 4339442; 12.02.1994 DE 4404579
(43) Veröffentlichungstag der Anmeldung: 24.05.1995
(73) Patentinhaber: Amazonen-Werke H. Dreyer GmbH & Co. KG, 49205 Hasbergen (DE)
(72) Erfinder: Dreyer, Heinz, Dr. Dipl.-Ing., D-49205 Hasbergen (DE)

(56) Entgegenhaltungen:
- EP-A- 0 183 203
- EP-A- 0 200 967
- EP-A- 0 217 387
- DE-A- 3 431 327
- DE-A- 4 237 093
- DE-U- 9 101 998
- US-A- 1 556 899

## Beschreibung

Die Erfindung betrifft eine Drillmaschine gemäß des Oberbegriffes des Patentanspruches 1.

Eine derartige Drillmaschine ist durch die EP 01 83 203 A2 bekannt. Bei dieser Drillmaschine sind die Flügel an dem aufrecht verlaufenden Halterungssteg befestigt.

Das DE-U 91 01 998 zeigt ein Säschar, an welchem mittels Halterungselementen seitlich abstehende, den Boden auf Saathorizonthöhe durchschneidende Flügel angeordnet sind.

Durch die DE-A- 34 31 327 ist eine Drillmaschine zur Direktsaat bekannt, wobei die Säschare als Meißelschare ausgebildet sind. Diese Meißelsäschare reißen eine schmale Furche in den Boden, in welcher das Saatgut abgelegt wird. Das Säschar ist mittels einer parallelogrammartgien Halterung in aufrechter Ebene bewegbar am Rahmen angeordnet. Desweiteren weist die obere Strebe der parallelogrammartigen Halterung einen federbelasteten Knickmechanismus auf, der als Steinsicherung dient. Darüberhinaus ist die parallelogrammartige Halterung seitenelastisch ausgebildet, so daß das Säschar beim Auftreffen auf im Boden festsitzenden Hindernissen seitlich ausweichen kann.

Bei einer Drillmaschine nach der DE-A-26 05 017 sind die Flügel unmittelbar an dem Säschar befestigt. Die Flügel sind in dreidimensionaler Ebene verformt. Desweiteren kommt es sehr häufig zu Beschädigungen an den Flügeln, wenn diese auf im Boden festsitzende Steine auftreffen.

Der Erfindung liegt die Aufgabe zugrunde, eine vorteilhafte Ausbildung der Säschare zu schaffen.

Diese Aufgabe wird erfindungsgemäß in einer Ausführungsform durch die kennzeichnenden Merkmale des Anspruches 1 gelöst. Hierdurch können die Säschare in sehr einfacher Weise hergestellt werden.

Dadurch, daß die Säschare eine Stoß- oder Rammnase aufweisen, können die Säschare auch auf steinige Böden eingesetzt werden. Diese Rammnase kann in Draufsicht gesehen die Halbflügelemente nach vorn überragen, so daß in jedem Falle sichergestellt ist, daß die Stoß- oder Rammnase die Halbflügelemente ausreichend schützen kann. Um einen möglichst geringen Verschleiß der Stoß- oder Rammnase bzw. des Halterungssteges zu erreichen, ist dieser mit einer Aufpanzerung versehen. Dadurch, daß die Halbflügelelemente seitlich des Halterungssteges und/oder Stoß- oder Rammnase befestigt sind, wird eine einfache Befestigung der Halbflügelelemente erreicht. Eine einfache Herstellung der Halbflügel elemente wird dadurch erreicht, daß sie durch Abkanten von plattenförmigen Elementen hergestellt sind. Es ist keine aufwendige dreidimensionale Verformung erforderlich.

Eine sehr einfache Ausbildung und Herstellung der Flügel wird dadurch erreicht, daß die den Boden unterschneidenden Flügel als Halbflügel ausgebildet sind, wobei jeweils auf jeder Seite des Halterungssteges oder der Stoß- und/oder Rammnase ein Halbflügel angeordnet ist. Hierdurch wird die Grundvoraussetzung dafür geschaffen, daß die Halbflügel durch einfaches Abkanten von plattenförmigen Elementen herstellbar sind. Hierbei ist vorgesehen, daß die schneidenden Flügelflächen als zwei Halbflügelelemente sowie spiegelbildlich ausgestaltet sind.

Weiterhin ist vorgesehen, daß die Halbflügelelemente auswechselbar an dem Halterungssteg und/oder der Stoß- oder Rammnase befestigt sind. Hierdurch ist es in einfacher Weise möglich, die Halbflügelelemente beispielsweise nach Verschleiß oder Beschädigung austauschen zu können. Auch ist es hierdurch möglich, unterschiedliche Halbflügelelemente an dem Halterungssteg und/oder der Stoß-oder Rammnase zu befestigen. Hierdurch kann die Maschine an unterschiedliche Einsatzbedingungen angepaßt werden. Auch können hier unterschiedliche Reihenweiten realisiert werden. Die Befestigung der Halbflügelelemente an dem Halterungssteg und/oder der Stoß- oder Rammnase erfolgt bevorzugt mittels Schrauben.

Eine vorteilhafte Aufhängung der Säschare an dem Rahmen und eine gute Tiefenführung der Säschare wird dadurch erreicht, daß die Säschare mittels einer parallelogrammartigen Halterung in aufrechter Ebene bewegbar am Rahmen der Drillmaschine angeordnet sind. In vorteilhafter Weise ist die parallelogrammartige Halterung mit einer Steinsicherung ausgerüstet, so daß die Säschare beim Auftreffen auf im Boden festsitzende Steine nach oben und/oder hinten ausweichen können.

Um die Drillmaschine universell einsetzbar zu machen, ist vorgesehen, daß der Halterungssteg und/oder die Stoß- oder Rammnase lös- und/oder auswechselbar an der Scharhalterung befestigt ist und gegen anders ausgebildete Schartypen, wie beispielsweise Meißelschare, Scheibenschare austauschbar ist.

Eine optimale Tiefenführung der Säschare wird dadurch erreicht, daß jedem oder maximal zwei Scharen jeweils eine Tiefenführungsrolle zugeordnet ist. Hierdurch wird sichergestellt, daß jedes Säschar in der optimalen Tiefe durch den Boden geführt wird, so daß das Saatgut auch in gleichmäßiger Tiefe im Boden abgelegt wird.

Weiterhin wird eine Verbesserung der Steinsicherheit der Maschine, so daß die Säschare nicht beschädigt werden, dadurch erreicht, daß die Schare quer zur Fahrtrichtung seitenelastisch aufgehängt sind. Ist vor allem bei dem Einsatz der breiten Flügel auf steinigen Böden äußerst vorteilhaft.

Um eine Breitverteilung des Saatgutes in einer Bandablage im Boden zu erreichen, ist vorgesehen, daß unterhalb der Halbflügelemente ein Prallkörper zum Breitverteilen des Saatgutes und/ des Düngers angeordnet ist.

Damit, wenn die Drillmaschine auf feuchten, nassen sowie klebrigen Böden eingesetzt wird, wenn beispielsweise die Gefahr droht, daß die Säschare auf ihrer Unterseite sich mit nassem Boden zusetzen, ist es vorteilhaft, wenn der Prallkörper abnehmbar an den Halbflügelementen und/oder Halterungssteg der Säschare befestigbar ist, so daß bei Bedarf der Prallkörper abgenommen werden kann. Es kann dann noch immer auch bei diesen ungünstigen Einsatzbedingungen das Saatgut ausgebracht werden.

Damit eine optimale Anpassung der Saatgutverteilung auf die jeweils vorherrschenden Einsatzbedingungen möglich ist, ist es möglich, daß wahlweise ein starrer oder beweglicher Prallkörper an dem Säschar anzuordnen ist.

Durch die verteilhafte Ausbildung der Drillmaschine mit der Aufhängung der Säschare an parallelogrammartigen Halterung und einer zugeordneten Druckrolle, die unbeweglich oder einstellbar an dem Säschar angeordnet ist, wird eine präzise und gleichmäßige Tiefenführung, und somit eine gleichmäßige Sätiefe aller Säschare erreicht, weil die Tiefenführungsrolle den Boden im Bereich der Säschare und der momentanen Saatgutablage abtastet. Durch die präzise in der Tiefe geführten Säschare mit den seitlich abstehenden Halbflügelelementen wird eine echte Minimum-Tillage erreicht. Es wird eine Bodenbearbeitung nur in dem gerade erforderlichen Maß mit einer gleichzeitig einhergehenden Unkrautbekämpfung durchgeführt. Gleichzeitig wird die Bearbeitungstiefe des Bodens durch die Säschare mit den abstehenden Flügeln einzeln in der Tiefe gesteuert. Es ergibt sich hierdurch eine präzise Sä- und Bearbeitungstiefe durch die Säschare aufgrund des abtastens der Bodenoberfläche durch die Tiefenführungsrolle.

Durch den Prospekt John Deere Drills and Seeders "Drills and Air Seeders for clean-till to no-till" mit Druckvermerk DKA 141 Litho in USA (93-02) ist eine Direktsämaschine beschrieben, deren Rahmen aus drei einzelnen Sektionen besteht. Jede Sektion wird einzeln in der Höhe über Stützräder geführt. An diesen einzelnen Rahmensektionen sind die Säschare in aufrechter Ebene mittels einer Halterung aufgehängt. Die Säschare werden mittels einer Druckfeder in den Boden gedrückt. Gegen diese Druckfeder können die Säschare beim Auftreffen auf Steinen nach oben ausweichen. Hinter den Säscharen ist eine Druckrolle angeordnet, die jedoch nicht als Tiefenführungsrolle dient. Diese Rolle ist schwenkbar an dem Säschar gegen eine Druckfeder angeordnet. Diese Druckfeder dient nicht zur Tiefenführung der Säschare. Die Säschare werden durch die an den Rahmensektionen angeordneten Laufräder gruppenweise in der Höhe geführt. Hierdurch ist auf den Böden, auf denen die Drillmaschine zum Einsatz kommt,die in den wenigsten Fällen völlig eben sind, eine exakte Tiefenführung der Säschare im Boden und somit eine gleichmäßige Ablagetiefe des Saatgutes im Boden nicht möglich.

In vorteilhafter Wiese läßt sich mit der Vorrichtung eine mechanische Unkrautbekämpfung sowie die Bekämpfung des Ausfallgetreides dadurch durchführen, daß die Elemente mittels einer parallelogrammartigen Halterung in aufrechter Ebene bewegbar am Rahmen der Vorrichtung angeordnet sind. Hierdurch wird in vorteilhafter Weise sichergestellt, daß die Wurzeln des Ausfallgetreides und der Unkräuter in der richtigen Tiefe im Boden abgeschnitten werden, damit eine sichere mechanische Unkrautbekämpfung stattfindet.

Als vorteilhaft hat sich herausgestellt, daß jedem oder maximal zwei Elementen jeweils eine Tiefenführungsrolle zugeordnet ist.

Ein optimaler Einsatz dieser Vorrichtung läßt sich dadurch erreichen, daß den Elementen Saatgutzuführungselemente zugeordnet sind, so daß über diese Elemente Saatgut in den Boden einbringbar ist.

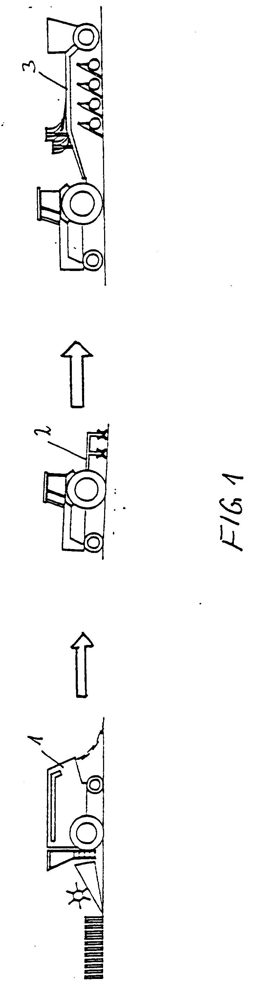

Weitere Einzelheiten der Erfindung sind den obigen Unteransprüchen, der Beispielsbeschreibung und den Zeichnungen zu entnehmen. Hierbei zeigen
Fig. 1 das erfindungsgemäße Verfahren in Prinzipdarstellung,
Fig. 2 eine Sämaschine zur Durchführung des Verfahrens,
Fig. 3 ein Säschar in Seitenansicht, Teilansicht und vergrößertem Maßstab,
Fig. 4 das Säschar gemäß Fig. 3 in der Ansicht von vorne in Teilansicht,
Fig. 5 ein weiteres Säschar in der Ansicht gemäß Fig. 4,
Fig. 6 ein weiteres Säschar entsprechend der Darstellung gemäß Fig. 3 mit einem anders ausgebildeten Prallkörper, und
Fig. 7 ein weiteres Verfahren in Prinzipdarstellung.

Das erfindungsgemäße Verfahren folgt folgenden Schritten:

Wenn durch den Mähdrescher 1 das Feld abgeerntet worden ist, wird in einem ersten Bearbeitungsvorgang beispielsweise durch eine Spatenrollegge 2 das abgeerntete Feld in einem flachen Bearbeitungsvorgang bearbeitet, so daß das Ausfallgetreide und die Unkrautsamen zum Auflaufen stimuliert werden. Dieser Bearbeitungsvorgang wird so frühzeitig vorgenommen, daß bis zum Einsäen des Saatgutes mit einer Sämaschine 3 das Ausfallgetreide und die Unkrautsamen in jedem Fall aufgelaufen sind; das heißt, daß das Feld "grün" sein muß, wenn mit der Drillmaschine 3 das Saatgut ausgebracht wird. Falls erwünscht, kann zwischen dem ersten Bearbeitungsvorgang mit der Spatenrollegge 2 und dem Einsäen des Saatgutes mit der Sämaschine 3 ein weiterer Bearbeitungsvorgang mit einem Bodenbearbeitungsgerät, beispielsweise der Spatenrollegge 2 vorgenommen werden. Mittels der Sämaschine 3, die wie weiter unter erläutert werden wird, den Boden unterschneidende Flügel 4 aufweisende und durch als Rollen 5 ausgebildete Tiefenführungselemente in ihrer eigentlichen Tiefe geführte Säschare 6 besitzt, wird das Saatgut in den Boden eingebracht. Die Flügel 4 der Säschare 6 schneiden zumindest teilweise das aufgelaufene Ausfallgetreide sowie die Unkräuter ab. Hierdurch erfolgt eine mechanische Unkrautbekämpfung.

Die für das Verfahren vorgesehene Drillmaschine 3 weist den Rahmen 7, die Deichsel 8, die an die Anhängekupplung des Schleppers angekuppelt wird, sowie die Laufräder 9 auf. An dem Rahmen 7 ist der Vorratsbehälter 10 angeordnet. An dem Rahmen 7 sind weiterhin über parallelogrammartige Halterungen 11 die Säschare 6 angeordnet. Der Unterlenker 12 der parallelogrammartigen Halterung 11 ist aus Federstahl hergestellt, so daß die Halterung 11 quer zur Fahrtrichtung 13 gesehen seitenelastisch ausgebildet ist. Hierzu ist der Oberlenker 14 der parallelogrammartigen Halterung 11 mit Kugelgelenken versehen, so daß das Säschar 6 jeweils um den Unterlenker 12 seitlich zur Fahrtrichtung 13 verdrehend ausweichen kann. Somit ist die Halterung 11 feder-, dreh- und verdrehelastisch ausgebildet. Dies wirkt sich insbesondere, wenn die Säschare 6 seitlich auf im Boden auftreffenden Hindernissen auftreffen vorteilhaft aus, weil sie seitlich ausweichen können. Weiterhin ist der Oberlenker 14 gegen Federkraft einknickbar ausgebildet, so daß sich hierdurch eine zusätzliche Steinsicherung für die Säschare 6 ergibt, so daß die Säschare 6, wenn sie auf einen im Boden festsitzenden Stein auftreffen, nach hinten oben ausweichen können, in dem der Oberlenker 14 einknickt.

Den Säscharen 6 wird aus dem Vorratsbehälter 10 über eine nicht dargestellte Dosiereinrichtung und über die pneumatische Zuleitung 15, den Verteilerköpfen 16, sowie den Zuleitungsschläuchen 17 Saatgut in dosierter Menge zugeleitet.

Hinter den Säscharen 6 befindet sich eine sogenannter Striegelrotor 18, der auf der Bodenoberfläche befindliche Pflanzen und Unkräuter verteilt, in dem der motorisch angetriebene Rotor 18 mit seinen zinkenartigen Elementen 19 die Unkräuter aufhebt und nach hinten wirft. Weiterhin können die zinkenartigen Elemente 19 des Rotors 18 die von den Flügeln 4 der Säschare 6 abgeschnittenen Pflanzenteile aus dem Boden herausziehen und auf der Bodenoberfläche ablegen.

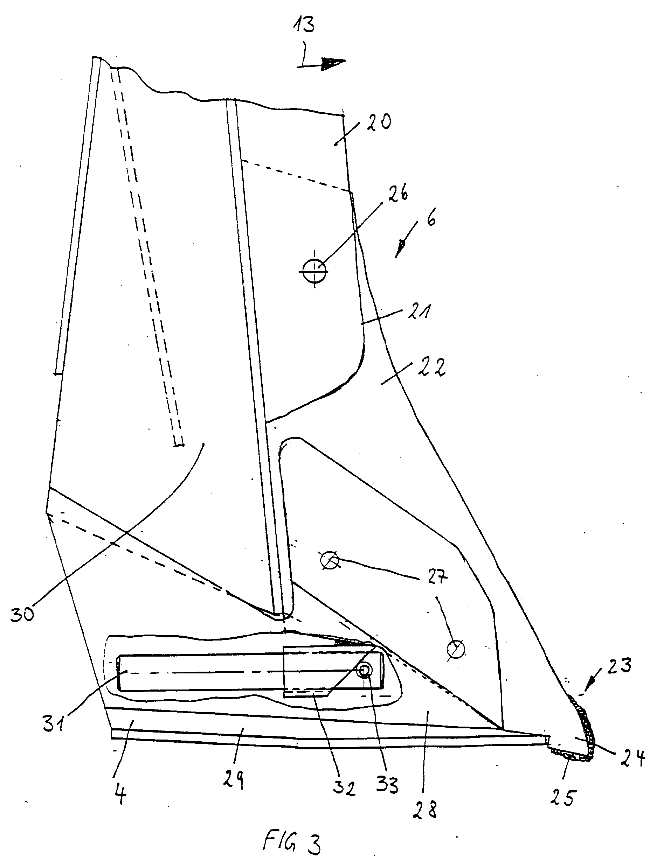

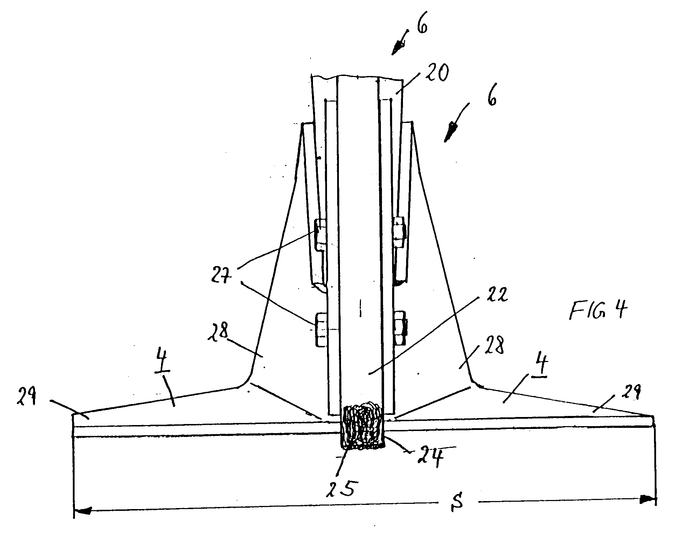

Die Säschare 6 weisen die Scharhalterung 20 auf. Am unteren Ende 21 auf der Vorderseite der Scharhalterung 20 des Säschares 6 befindet sich der aufrecht verlaufende Halterungssteg 22, welcher auf seiner vorderen unteren Seite 23 eine Stoß- und Rammnase 24 aufweist, die in ihrem unteren Bereich mit einer Aufpanzerung 25 versehen ist. Der Halterungssteg 22 ist mittels der Schraube 26 an der Scharhalterung 20 lös- und austauschbar befestigt. An dem Halterungssteg 23 sind mittels der beiden Schrauben 27 das aus zwei Halbflügeln 28 bestehende Flügelelement 4 lösbar und auswechselbar befestigt. Die Halbflügel 28 sind jeweils auf jeder Seite des Halterungssteges 22 und der Stoß- und Rammnase 24 angeordnet. Die Halbflügel 28 sind durch Abkanten von plattenförmigen Elementen in einfacher Weise hergestellt und spiegelbildlich ausgestaltet. Die Flügelflächen 29 unterschneiden den Boden beim Ausbringen des Saatgutes. Die gemäß der Fig. 3 und 4 dargestellten Flügel 4 des Säschares 6 weisen eine Scharflügelbreite S auf, die zumindest annähernd gleich oder größer als die Reihenweite der in Fahrtrichtung 13 gesehen zueinander angeordneten Säschare 6 aufweisen, so daß die Flügelflächen 29 den Boden auf die gesamte Arbeitsbreite den Boden unterschneiden, so daß eine vollständige Unkrautbekämpfung durch die Flügel 4 erfolgt.

Bei dem Einsatz dieser relativ breiten Scharflügel 4 hat sich die seitenelastische Ausbildung der parallelogrammartigen Halterung 11 als vorteilhaft herausgestellt.

Hinter jedem Säschar 6 ist eine Tiefenführungsrolle 5 angeordnet, welche jedes Säschar 6 individuell in ihrer Tiefe führt, so daß das Saatgut in gleichmäßiger Tiefe im Boden abgelegt wird.

Unterhalb der Flügelelemente 28 des Schares 6 und unterhalb des Saatgutauslaufes 30 befindet sich der Prallkörper 31. Das aus dem Scharauslauf 30 herausfallende Saatgut trifft auf den Prallkörper 31 und wird von diesem in der Breite verteilt, so daß das Saatgut in einem breiten Band im Boden unterhalb der Scharflügelelemente 28 abgelegt wird. Der Prallkörper 31 ist leicht abnehmbar und austauschbar in der Prallkörperhalterung 32 angeordnet. Durch einfaches Herausschlagen des Spannstiftes 33 kann der Prallkörper 31 abgenommen werden. Dieses ist vor allem beim Einsatz der mit den Scharflügeln 28 ausgestatteten Säschare 6 beim Einsatz auf nassen und klebrigen Böden von Vorteil, weil hierdurch es nicht zu einem Verschmieren auf der Unterseite des Säschares 6 kommen kann. Auch unter diesen ungünstigen Bedingungen kann dann immer noch Saatgut ausgebracht werden.

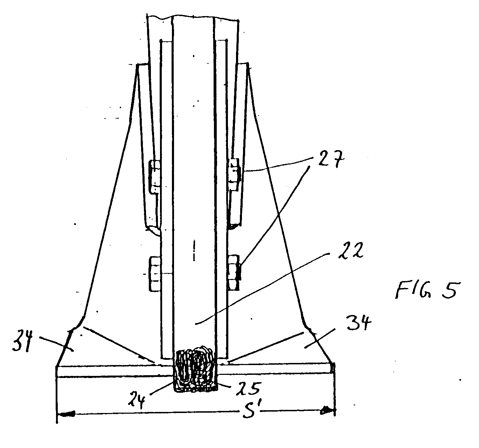

Falls es besondere Einsatzbedingungen erfordern, können die relativ breiten Scharflügel 4 entsprechend den Fig. 3 und 4 gegen die schmaleren Scharflügel 34 mit der Scharflügelbreite 5' entsprechend Fig. 5 ausgetauscht werden. Es wird dann mit diesen Scharflügeln 34 der Boden nicht mehr auf der gesamten Arbeitsbreite, sondern nur noch in Streifen, im Bereich der unmittelbaren Saatgutablage unterschnitten.

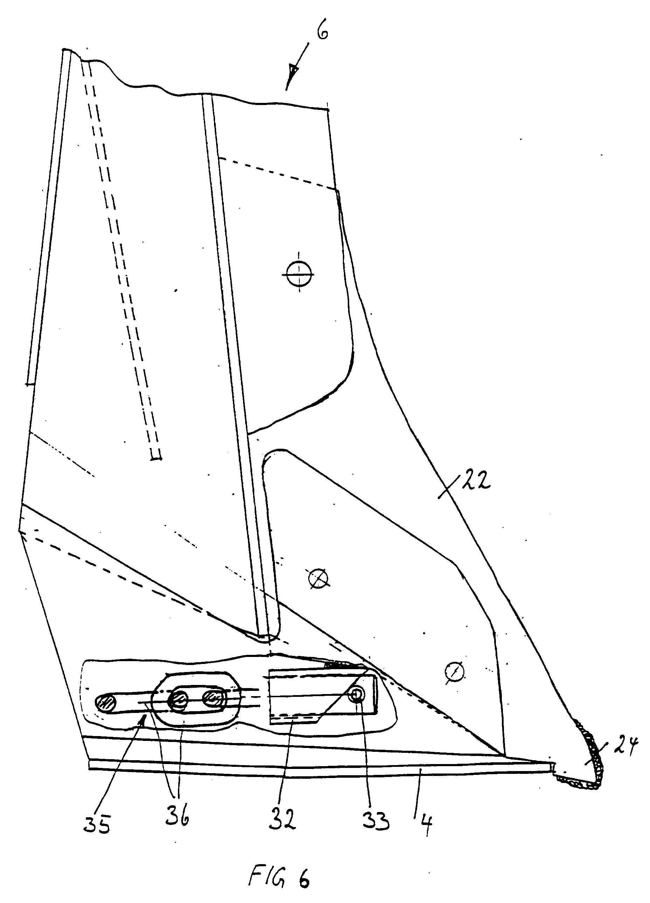

Falls erwünscht kann der Prallkörper 31 gemäß Fig. 3 gegen den gemäß Fig. 6 dargestellten beweglichen Prallkörper 35, der aus mehreren Kettengliedern 36 besteht, ausgetauscht werden.

Mittels der in Fig. 3, 4 und 5 dargestellten Säschare 6, die durch eine an den Säscharen jeweils angeordnete Druckrolle 5 individuell in ihrer Eindringtiefe in den Boden geführt werden, in dem für jedes Säschar die hinter dem Säschar 6 angeordnete Tiefenführungsrolle 5 die Bodenoberfläche im Bereich der Saatgutablage abtastet. Somit ergibt sich eine äußerst gleichmäßige Saatgutablage. Die Scharflügel 4, 34 machen eine echte Minimum - Tillage, denn der Boden wird nur in dem Bereich, in dem das Saatgut abgelegt wird, bearbeitet.

Falls erwünscht kann nach Entfernen der Schraube 26 der Halterungssteg 22 mit den Scharflügeln 4 oder 34 abgenommen und durch ein Scheiben- oder Meißelschareinsatzelement ersetzt werden.

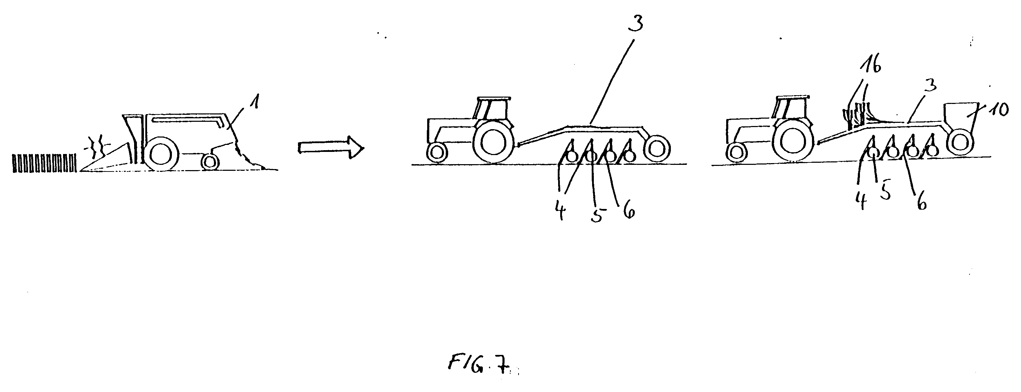

Ein weiteres Verfahren gemäß Fig. 7 folgt folgenden Schritten:

Wenn durch den Mähdrescher 1 das Feld abgeerntet worden ist, wird in einem ersten Bearbeitungsvorgang durch die Sämaschine 3 mit den Boden unterschneidende Flügel 4 aufweisenden Säscharen 6 das abgeerntete Feld in einem flachen Bearbeitungsvorgang bearbeitet, so daß das Ausfallgetreide und die Unkrautsamen zum Auflaufen stimuliert werden. Die Säschare 6 werden in ihrer Eindringtiefe in den Boden durch die zugeordneten Tiefenführungsrollen 5 geführt. Die als Bodenbearbeitungselemente wirkenden Säschare 6 sind über parallelogrammartige Halterungen 11 am Rahmen höhenbewegbar angeordnet. Dieser Bearbeitungsvorgang wird so frühzeitig vorgenommen, daß bis zum Einsäen des Saatgutes mit einer Sämaschine 3 das Ausfallgetreide und die Unkrautsamen in jedem Fall aufgelaufen sind; das heißt, daß das Feld "grün" sein muß, wenn mit der Drillmaschine 3 das Saatgut ausgebracht wird. Falls erwünscht, kann zwischen dem ersten Bearbeitungsvorgang und dem Einsäen des Saatgutes mit der Sämaschine 3 ein weiterer Bearbeitungsvorgang vorgenommen werden. Mittels der Sämaschine 3, die wie weiter unter erläutert werden wird, den Boden unterschneidende Flügel 4 aufweisende und durch als Rollen 5 ausgebildete Tiefenführungselemente in ihrer eigentlichen Tiefe geführte Säschare 6 besitzt, wird das Saatgut in den Boden eingebracht. Die Flügel 4 der Säschare 6 schneiden zumindest teilweise das aufgelaufene Ausfallgetreide sowie die Unkräuter ab. Hierdurch erfolgt eine mechanische Unkrautbekämpfung.

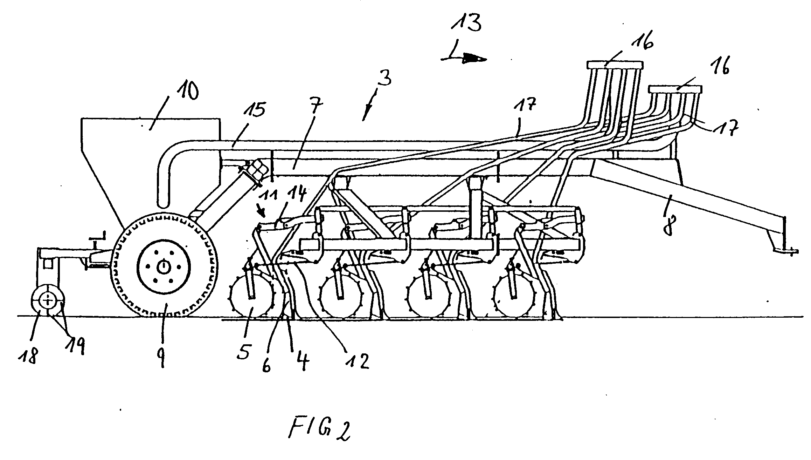

Die für das Verfahren gemäß Fig 7 vorgesehene Drillmaschine 3 ist in Fig. 2 beschrieben.

## Patentansprüche

1. Drillmaschine mit Säscharen (6), die seitlich abstehende, den Boden auf Saathorizonthöhe durchschneidende plattenförmige Flügel (4, 28, 29, 34) aufweisen, die eben und spiegelbildlich ausgebildet an einem aufrecht verlaufenden Halterungssteg (22) befestigt sind, dadurch gekennzeichnet, daß die Säscharen jeweils eine Stoß- oder Rammnase besitzen, die den Boden unterschneidenden Flügel als zwei separate Halbflügelelemente seitlich des Halterungssteges und/oder der Stoß- oder Rammnase befestigt sind und aus abgekanteten Elementen bestehen.

2. Drillmaschine nach Anspruch 1, dadurch gekennzeichnet, daß die Halbflügelelemente (4, 28, 29, 34) auswechselbar an dem Halterungssteg (22) und/oder der Stoß- oder Rammnase (24) befestigt sind.

3. Drillmaschine nach einem oder mehreren der vorstehenden Ansprüche, dadurch gekennzeichnet, daß die Säschare (6) mittels einer parallelogrammartigen Halterung (11) in aufrechter Ebene bewegbar am Rahmen (7) der Drillmaschine angeordnet sind.

4. Drillmaschine nach einem oder mehreren der vorstehenden Ansprüche, dadurch gekennzeichnet, daß die parallelogrammartige Halterung (11) eine Steinsicherung (14) aufweist.

5. Drillmaschine nach einem oder mehreren der vorstehenden Ansprüche, dadurch gekennzeichnet, daß unterschiedlich breite Halbflügelelemente (4, 28, 29, 34) an dem Halterungssteg (22) und/oder der Stoß- oder Rammnase (24) befestigbar sind.

6. Drillmaschine nach einem oder mehreren der vorstehenden Ansprüche, dadurch gekennzeichnet, daß der Halterungssteg (22) und/oder die Stoß- oder Rammnase (24) lös- und/oder auswechselbar an der Scharhalterung (20) befestigt ist und gegen anders ausgebildete Schartypen, wie beispielsweise Meißelschare austauschbar sind.

7. Drillmaschine nach einem oder mehreren der vorstehenden Ansprüche, dadurch gekennzeichnet, daß jedem oder maximal zwei Scharen (6) jeweils eine Tiefenführungsrolle (5) zugeordnet ist.

8. Drillmaschine nach einem oder mehreren der vorstehenden Ansprüche, dadurch gekennzeichnet, daß die Schare (6) quer zur Fahrtrichtung (13) seitenelastisch aufgehängt sind.

9. Drillmaschine nach Anspruch 1 oder 2, dadurch gekennzeichnet, daß unterhalb der Halbfügelelemente (4, 28, 29, 34) ein Prallkörper (31, 35) zum Breitverteilen des Saatgutes und/oder Düngers angeordnet ist.

10. Drillmaschine nach Anspruch 1 oder 2, dadurch gekennzeichnet, daß der Prallkörper (31, 35) abnehmbar an den Halbflügelementen (4, 28, 29, 34) und/oder Halterungssteg (22) der Säschare (6) befestigbar ist.

11. Drillmaschine nach einem oder mehreren der vorstehenden Ansprüche, dadurch gekennzeichnet, daß ein starrer oder beweglicher Prallkörper (31, 35) vorgesehen ist.

12. Drillmaschine nach einem oder mehreren der vorstehenden Ansprüche, dadurch gekennzeichnet, daß die Scharflügelbreite (S) zumindest annähernd gleich oder größer als die Reihenweite ist.

## Claims

1. Seed drill, which is provided with sowing coulters (6), which include laterally protruding, plate-like vanes (4, 28, 29, 34) which cut through the ground at seed level and are mounted on an upwardly extending retaining web (22) so as to have a flat and symmetrical configuration, characterised in that the sowing coulters each have a pushing or ramming projection, and in that the vanes, which cut beneath the ground, are mounted as two separate half-vane elements laterally of the retaining web and/or of the pushing or ramming projection and comprise bent-over elements.

2. Seed drill according to claim 1, characterised in that the half-vane elements (4, 28, 29, 34) are interchangeably mounted on the retaining web (22) and/or on the pushing or ramming projection (24).

3. Seed drill according to one or more of the preceding claims, characterised in that the sowing coulters (6) are disposed on the frame (7) of the seed drill by means of a parallelogram-shaped holder (11) so as to be displaceable in an upwardly extending plane.

4. Seed drill according to one or more of the preceding claims, characterised in that the parallelogram-shaped holder (11) has a stone repelling means (14).

5. Seed drill according to one or more of the preceding claims, characterised in that half-vane elements (4, 28, 29, 34) of varying widths are mountable on the retaining web (22) and/or on the pushing or ramming projection (24).

6. Seed drill according to one or more of the preceding claims, characterised in that the retaining web (22) and/or the pushing or ramming projection (24) are/is detachably and/or interchangeably mounted on the coulter holder (20) and are/is exchangeable for differently configured coulter types, such as bit coulters, for example.

7. Seed drill according to one or more of the preceding claims, characterised in that a depth control roller (5) is respectively associated with each or a maximum of two coulters (6).

8. Seed drill according to one or more of the preceding claims, characterised in that the coulters (6) are suspended so as to be laterally resilient transversely relative to the direction of travel (13).

9. Seed drill according to claim 1 or 2, characterised in that a deflecting member (31, 35) is disposed beneath the half-vane elements (4, 28, 29, 34) for the wide distribution of the seeds and/or fertiliser.

10. Seed drill according to claim 1 or 2, characterised in that the deflecting member (31, 35) is detachably mountable on the half-vane elements (4, 28, 29, 34) and/or retaining web (22) of the sowing coulters (6).

11. Seed drill according to one or more of the preceding claims, characterised in that a rigid or displaceable deflecting member (31, 35) is provided.

12. Seed drill according to one or more of the preceding claims, characterised in that the coulter vane width (S) is at least approximately identical to, or greater than, the row width.

## Revendications

1. Semoir comportant des socs de semoir (6) ayant des ailettes (4, 28, 29, 34) en forme de plaques, venant latéralement en saillie et coupant le sol à la hauteur de l'horizon d'ensemencement, et elles sont fixées sur une tige de support (22), s'étendant verticalement,
caractérisé en ce que
les socs de semoir ont chaque fois un bec de poussée ou de dégagement, les ailettes qui coupent sous le sol sont deux demi-éléments d'ailettes séparés, prévus à côté de la tige de support et/ou fixés au bec de poussée ou de dégagement, et elles sont formées d'éléments repliés.

2. Semoir selon la revendication 1,
caractérisé en ce que
les éléments en forme de demi-ailettes (4, 28, 29, 34) sont fixés de manière remplaçable sur la tige de support (22) et/ou le bec de poussée ou de dégagement (24).

3. Semoir selon l'une ou plusieurs des revendications précédentes,
caractérisé en ce que
les socs de semoir (6) sont montés à l'aide d'un support (11) en forme de parallélogramme, de façon mobile dans un plan vertical sur le châssis (7) du semoir.

4. Semoir selon l'une ou plusieurs des revendications précédentes,
caractérisé en ce que
le support (11) en forme de parallélogramme présente un moyen de protection contre les cailloux (14).

5. Semoir selon l'une ou plusieurs des revendications précédentes,
caractérisé en ce que
des éléments en forme de demi-ailettes (4, 28, 29, 34) de largeurs différentes sont fixés sur la tige de fixation (22) et/ou sur le bec de poussée ou de dégagement (24).

6. Semoir selon l'une ou plusieurs des revendications précédentes,
caractérisé en ce que
la tige de fixation (22) et/ou le bec de poussée ou de dégagement (24) est fixé de manière amovible et/ou interchangeable à la fixation de soc (20) et peut être échangée contre d'autres types de socs, par exemple des socs coultre.

7. Semoir selon l'une ou plusieurs des revendications précédentes,
caractérisé en ce qu'
un galet de guidage en profondeur (5) est associé à chaque soc ou au maximum à deux socs (6).

8. Semoir selon l'une ou plusieurs des revendications précédentes,
caractérisé en ce que
les socs (6) sont suspendus élastiquement dans la direction latérale, transversalement à la direction de déplacement (13).

9. Semoir selon l'une des revendications 1 ou 2,
caractérisé par
un élément à chocs (31, 35) en dessous des éléments en forme de demi-ailettes (4, 28, 29, 34) pour répartir en largeur la semence et/ou l'engrais.

10. Semoir selon la revendication 1 ou 2,
caractérisé en ce que
l'élément à chocs (31, 35) est fixé de manière amovible sur les éléments en forme de demi-ailettes (4, 28, 29, 34) et/ou la tige de fixation (22) des socs de semoir (6).

11. Semoir selon l'une ou plusieurs des revendications précédentes,
caractérisé par
un élément à chocs est prévu rigide mobile (31, 35).

12. Semoir selon l'une ou plusieurs des revendications précédentes,
caractérisé en ce que
la largeur des ailettes (S) est au moins approximativement égale ou supérieure à la largeur d'une rangée.
